# EUROPEAN PATENT APPLICATION

(11) **EP 3 950 907 A1**
(43) Date of publication of application: **09.02.2022**
(21) Application number: 20783756.8
(22) Date of filing: 03.04.2020
(51) Int. Cl.: C10N 30/08, C10N 40/30, C10M 107/24, C10M 107/34, C09K 5/04

(54) **LUBRICATING OIL COMPOSITION FOR REFRIGERATOR**

(30) Priority: 04.04.2019 JP 2019072239
(71) Applicant: Idemitsu Kosan Co., Ltd., Chiyoda-ku Tokyo, 100-8321 (JP)
(72) Inventor: MATSUMOTO, Tomoya, Ichihara-shi, Chiba 299-0107 (JP)
(74) Representative: Hoffmann Eitle
(86) International application number: PCT/JP2020/015315
(87) International publication number: WO 2020/204162

(57) **Abstract**

The invention addresses a problem of providing a lubricating oil composition for refrigerators excellent in thermal stability for a refrigerant that contains difluoromethane (R32), trifluoroiodomethane (CF₃I) and at least one compound (α) selected from saturated fluorinated hydrocarbon compounds (HFC) except difluoromethane (R32). The lubricating oil composition for refrigerators is used for a refrigerant containing difluoromethane (R32), trifluoroiodomethane (CF₃I) and at least one compound (α) selected from saturated fluorinated hydrocarbon compounds (HFC) except difluoromethane (R32), and contains at least one kind of base oil selected from polyoxyalkylene glycols, polyvinyl ethers, copolymers of a poly(oxy)alkylene glycol or a monoether thereof and a polyvinyl ether and polyol esters, in which the hydroxyl value of the base oil is 15 mgKOH/g or less.

## Description

### Technical Field

The present invention relates to a lubricating oil composition for refrigerators.

### Background Art

In general, a refrigerator, for example, a compression-type refrigerator includes at least a compressor, a condenser, an expansion mechanism (e.g., expansion valve) and an evaporator, and has a structure where a mixture of a refrigerant and a lubricating oil composition for refrigerators (hereinafter also referred to as "composition for refrigerators") is circulated in a closed system.

As the refrigerant which is used for compression-type refrigerators, fluorinated hydrocarbon compounds with a low environmental load have been being used in place of conventionally frequently used hydrochlorofluorocarbon (HCFC). As the fluorinated hydrocarbon compounds, a saturated fluorinated hydrocarbon compound (Hydro-Fluoro-Carbon; hereinafter also abbreviated as "HFC"), such as 1,1,1,2-tetrafluoroethane (R134a), difluoromethane (R32), and 1,1-difluoroethane (R152a), is being used.

In addition, use of an unsaturated fluorinated hydrocarbon compound (Hydro-Fluoro-Olefin; hereinafter also abbreviated as "HFO") having a low global warming potential, such as 1,3,3,3-tetrafluoropropene (R1234ze) and 2,3,3,3-tetrafluoropropene (R1234yf), is also investigated.

PTL 1 describes a mixed refrigerant of a combination of R134a and CF₃I, a mixed refrigerant of a combination of R152a and CF₃I, and a mixed refrigerant of a combination of R1234ze and CF₃I. PTL 1 also describes that, using a specific polyoxyalkylene glycol having a kinematic viscosity at 40°C of 10 to 300 cSt (10 to 300 mm²/s) as a refrigerator oil for these mixed refrigerants, the solubility of the refrigerants in the refrigerator oil can be improved.

### Citation List

### Patent Literature

PTL 1: JP 2009-143970 A

### Summary of Invention

### Technical Problem

A refrigerant having a lowered global warming potential tends to have improved combustibility. Consequently, it has heretofore been difficult to obtain an incombustible refrigerant while sufficiently lowering the global warming potential thereof, but recently, an incombustible refrigerant has become proposed while sufficiently lowering the global warming potential thereof. Specifically, taking particular note of a fact that trifluoroiodomethane (CF₃I) is incombustible and has a low global warming potential (GWP) and a low ozone depletion potential (ODP), a refrigerant containing difluoromethane (R32), trifluoroiodomethane (CF₃I) and at least one selected from saturated fluorinated hydrocarbon compounds (HFC) except difluoromethane (R32) is known.

However, in PTL 1, nothing is investigated about such a refrigerant.

An object of the present invention is to provide a lubricating oil composition for refrigerators excellent in thermal stability, for a refrigerant containing difluoromethane (R32), trifluoroiodomethane (CF₃I) and at least one selected from saturated fluorinated hydrocarbon compounds (HFC) except difluoromethane (R32).

### Solution to Problem

The present inventor has repeatedly made assiduous studies for attaining the above-mentioned object. As a result, the inventor has found that, using a specific base oil having a specific hydroxyl value, the above-mentioned object can be attained. The present invention has been completed based on the finding.

Specifically, the present invention relates to the following [1] to [9].
[1] A lubricating oil composition for refrigerators for use for a refrigerant that contains difluoromethane (R32), trifluoroiodomethane (CF₃I) and at least one compound (α) selected from saturated fluorinated hydrocarbon compounds (HFC) except difluoromethane (R32), which comprises at least one kind of base oil selected from polyoxyalkylene glycols, polyvinyl ethers, copolymers of a poly(oxy)alkylene glycol or a monoether thereof and a polyvinyl ether, and polyol esters, and wherein the hydroxyl value of the base oil is 15 mgKOH/g or less.
[2] The lubricating oil composition for refrigerators according to the above [1], wherein in the refrigerant, the total content of difluoromethane (R32) and trifluoroiodomethane (CF₃I) is 20% by mass or more and 99% by mass or less based on the total amount of the refrigerant, the content of trifluoroiodomethane (CF₃I) is 5% by mass or more and 80% by mass or less based on the total amount of the refrigerant, and the content of the compound (α) is 0.1% by mass or more based on the total amount of the refrigerant.
[3] The lubricating oil composition for refrigerators according to the above [1] or [2], wherein in the refrigerant, the total content of difluoromethane (R32) and trifluoroiodomethane (CF₃I) is 30% by mass or more and 95% by mass or less based on the total amount of the refrigerant, the content of trifluoroiodomethane (CF₃I) is 10% by mass or more and 60% by mass or less based on the total amount of the refrigerant, and the content of the compound (α) is 1% by mass or more based on the total amount of the refrigerant.
[4] The lubricating oil composition for refrigerators according to any of the above [1] to [3], wherein in the refrigerant, the total content of difluoromethane (R32) and trifluoroiodomethane (CF₃I) is more than 50% by mass and 90% by mass or less based on the total amount of the refrigerant, the content of trifluoroiodomethane (CF₃I) is 15% by mass or more and 50% by mass or less based on the total amount of the refrigerant, and the content of the compound (α) is 5% by mass or more based on the total amount of the refrigerant.
[5] The lubricating oil composition for refrigerators according to any of the above [1] to [3], wherein the compound (α) is 1,1,1,2,2-pentafluoroethane (R125).
[6] The lubricating oil composition for refrigerators according to any of the above [1] to [5], wherein the hydroxyl value of the base oil is 10 mgKOH/g or less.
[7] The lubricating oil composition for refrigerators according to any of the above [1] to [6], wherein the hydroxyl value of the base oil is 5 mgKOH/g or less.
[8] The lubricating oil composition for refrigerators according to any of the above [1] to [7], wherein the volume resistivity of the base oil is 1 × 10⁸ Ω·m or more.
[9] The lubricating oil composition for refrigerators according to any of the above [1] to [8], which is used in car air-conditioners, electromotive car air-conditioners, gas heat pumps, air conditioners, refrigerators, automatic vending machines, showcases, hot-water supply systems, refrigerating systems or heating systems.

### Advantageous Effects of Invention

According to the present invention, there can be provided a lubricating oil composition for refrigerators excellent in thermal stability, for a refrigerant containing difluoromethane (R32), trifluoroiodomethane (CF₃I) and at least one selected from saturated fluorinated hydrocarbon compounds (HFC) except difluoromethane (R32).

### Description of Embodiments

In the present specification, the lower limit values and the upper limit values described in stages for preferred numeral ranges (such as the range of the content) each may be independently combined. For example, from the expression "preferably 10 to 90, more preferably 30 to 60", "the preferred lower limit value (10)" and "the more preferred upper limit value (60) can be combined to be "10 to 60".

Similarly, in the present specification, numerical ranges of "or more", "or less", "less than" and "more than" relating to a description of numerical value ranges indicate numerical values that can be combined arbitrarily.

Also in the present specification, the numerical values in Examples are numerical values that can be employed as upper limit values or lower limit values.

### [Lubricating Oil Composition for Refrigerators]

The lubricating oil composition for refrigerators of the present invention is a lubricating oil composition for refrigerators for use for a refrigerant that contains difluoromethane (R32), trifluoroiodomethane (CF₃I) and at least one compound (α) selected from saturated fluorinated hydrocarbon compounds (HFC) except difluoromethane (R32), and the lubricating oil composition for refrigerators contains at least one kind of base oil selected from polyoxyalkylene glycols, polyvinyl ethers, copolymers of a poly(oxy)alkylene glycol or a monoether thereof and a polyvinyl ether, and polyol esters, wherein the hydroxyl value of the base oil is 15 mgKOH/g or less.

### <Refrigerant>

The lubricating oil composition for refrigerators of the present invention is used for a refrigerant that contains difluoromethane (R32), trifluoroiodomethane (CF₃I) and at least one compound (α) selected from saturated fluorinated hydrocarbon compounds (HFC) except difluoromethane (R32).

### (Preferred embodiments of refrigerant)

In one embodiment of the present invention, preferred embodiments of the refrigerant for use in the present invention include the following, from the viewpoint that the refrigerant can be poorly combustible and is excellent in safety while securing a low global warming potential.

The total content of difluoromethane (R32) and trifluoroiodomethane (CF₃I) is 20% by mass or more and 99% by mass or less based on the total amount of the refrigerant.

The content of trifluoroiodomethane (CF₃I) is 5% by mass or more and 80% by mass or less based on the total amount of the refrigerant, provided that the content of trifluoroiodomethane (CF₃I) is smaller than the total content of difluoromethane (R32) and trifluoroiodomethane (CF₃I).

The content of the compound (α) is 0.1% by mass or more based on the total amount of the refrigerant.

### (More preferred embodiments of refrigerant)

In one embodiment of the present invention, more preferred embodiments of the refrigerant for use in the present invention include the following, from the viewpoint that the refrigerant can be more poorly combustible and is more excellent in safety while securing a lower global warming potential.

The total content of difluoromethane (R32) and trifluoroiodomethane (CF₃I) is 30% by mass or more and 95% by mass or less based on the total amount of the refrigerant.

The content of trifluoroiodomethane (CF₃I) is 10% by mass or more and 60% by mass or less based on the total amount of the refrigerant, provided that the content of trifluoroiodomethane (CF₃I) is smaller than the total content of difluoromethane (R32) and trifluoroiodomethane (CF₃I).

The content of the compound (α) is 1% by mass or more based on the total amount of the refrigerant.

### (Even more preferred embodiments of refrigerant)

In one embodiment of the present invention, even more preferred embodiments of the refrigerant for use in the present invention include the following, from the viewpoint that the refrigerant can be even more poorly combustible and is even more excellent in safety while more efficiently securing a lower global warming potential.

The total content of difluoromethane (R32) and trifluoroiodomethane (CF₃I) is more than 50% by mass and 90% by mass or less based on the total amount of the refrigerant.

The content of trifluoroiodomethane (CF₃I) is 15% by mass or more and 50% by mass or less based on the total amount of the refrigerant.

The content of the compound (α) is 5% by mass or more based on the total amount of the refrigerant.

### (Compound (α))

At least one compound (α) selected from saturated fluorinated hydrocarbon compounds (HFC) except difluoromethane (R32) includes fluorinated compounds of an alkane having 1 to 4 carbon atoms, except difluoromethane (R32). Examples of the fluorinated compounds of an alkane having 1 to 4 carbon atoms include one or more selected from trifluoromethane (R23), 1,1-difluoroethane (R152a), 1,1,1-trifluoroethane (R143a), 1,1,2-trifluoroethane (R143), 1,1,2,2-tetrafluoroethane (R134), 1,1,1,2,2-pentafluoroethane (R125) and 1,1,1,2-tetrafluoroethane (R134a).

Among these, 1,1,1,2,2-pentafluoroethane (R125) is preferred.

### <Base Oil>

The base oil that the lubricating oil composition for refrigerators of the present invention contains includes one or more selected from polyoxyalkylene glycols, polyvinyl ethers, copolymers of a poly(oxy)alkylene glycol or a monoether thereof and a polyvinyl ether, and polyol esters, and has a hydroxyl value of 15 mgKOH/g or less.

When a base oil having a hydroxyl value of more than 15 mgKOH/g is used, the thermal stability of the lubricating oil composition for refrigerators lowers for the refrigerant that contains difluoromethane (R32), trifluoroiodomethane (CF₃I) and at least one compound (α) selected from saturated fluorinated hydrocarbon compounds (HFC) except difluoromethane (R32), and in addition, the refrigerant also denatured and degraded. Consequently, there may occur a risk of failure in good operation of refrigerating systems. Namely, the refrigerator composition formed of the refrigerant and the lubricating oil composition for refrigerators, that is, the refrigerator fluid composition degrades and denatures in early stages.

In the lubricating oil composition for refrigerators of one embodiment of the present invention, the hydroxyl value of the base oil is, from the viewpoint of more improving the thermal stability of the lubricating oil composition for refrigerators, preferably 10 mgKOH/g or less, more preferably 7 mgKOH/g or less, even more preferably 5 mgKOH/g or less further more preferably 4 mgKOH/g or less.

In the present specification, the hydroxyl value is a value measured according to the method defined by JIS K 0070:1992.

### ((Polyoxyalkylene Glycols))

Examples of the polyoxyalkylene glycols that can be used in the base oil in the lubricating oil composition for refrigerators of the present invention include compounds represented by the following general formula (I).

R¹-[(OR²)ₘ-OR³]ₙ (I)

In the formula (I), R¹ represents a hydrogen atom, a monovalent hydrocarbon group having 1 to 10 carbon atoms, an acyl group having 2 to 10 carbon atoms, a divalent or more and hexavalent or less hydrocarbon group having 1 to 10 carbon atoms, or an oxygen-containing hydrocarbon group having 1 to 10 carbon atoms. R² represents an alkylene group having 2 to 4 carbon atoms, R³ represents a hydrogen atom, a hydrocarbon group having 1 to 10 carbon atoms, an acyl group having 2 to 10 carbon atoms, or an oxygen-containing hydrocarbon group having 1 to 10 carbon atoms. n represents an integer of 1 to 6, and m represents a number that makes an average value of m × n 6 to 80.

In the general formula (I), the monovalent hydrocarbon group having 1 to 10 carbon atoms in R¹ and R³ may be linear, branched or cyclic. The hydrocarbon group is preferably an alkyl group, and specific examples thereof include a methyl group, an ethyl group, an n-propyl group, an isopropyl group, various butyl groups, various pentyl groups, various hexyl groups, various heptyl groups, various octyl groups, various nonyl groups, various decyl groups, a cyclopentyl group, and a cyclohexyl group. "Various" added to the hydrocarbon group names means various isomers including n-, sec-, tert- and iso-; and the same shall apply to the description after this. When the carbon number of the alkyl group is 10 or less, compatibility with the refrigerant can be readily bettered. A preferred carbon number of the alkyl group is 1 to 6.

The hydrocarbon group moiety in the acyl group having 2 to 10 carbon atoms in R¹ and R³ may be linear, branched or cyclic. The hydrocarbon group moiety in the acyl group is preferably an alkyl group, and specific examples thereof include various groups having 1 to 9 carbon atoms among those described hereinabove as specific examples of the alkyl group. When the carbon number of the acyl group is 10 or less, compatibility with the refrigerant can be readily bettered. A preferred carbon number of the acyl group is 2 to 6.

In the case where R¹ and R³ each are a hydrocarbon group or an acyl group, R¹ and R³ may be the same as or different from each other.

In the case where n is 2 or more, plural R³'s in one molecule may be the same as or different from each other.

In the case where R¹ is a divalent or more and hexavalent or less hydrocarbon group having 1 to 10 carbon atoms, the hydrocarbon group may be linear or cyclic. The divalent hydrocarbon group is preferably an aliphatic hydrocarbon group, and examples thereof includes an ethylene group, a propylene group, a butylene group, a pentylene group, a hexylene group, a heptylene group, an octylene group, a nonylene group, a decylene group, a cyclopentylene group, and a cyclohexylene group. The other hydrocarbon groups includes residues to be formed by removing hydroxy groups from bisphenols such as bisphenol, bisphenol F and bisphenol A. The trivalent or more and hexavalent or less hydrocarbon group is preferably an aliphatic hydrocarbon group, and examples thereof includes residues formed by removing hydroxy groups from polyalcohols such as trimethylolpropane, glycerin, pentaerythritol, sorbitol, 1,2,3-trihydroxycyclohexane, and 1,3,5-trihydroxycyclohexane. When the carbon number of the aliphatic hydrocarbon group is 10 or less, compatibility with the refrigerant can be readily bettered. A preferred carbon number is 2 to 6.

The oxygen-containing hydrocarbon group having 1 to 10 carbon atoms in R¹ and R³ includes a linear aliphatic hydrocarbon group and a cyclic aliphatic hydrocarbon group having an ether bond, and a tetrahydrofurfuryl group is especially preferred.

In one embodiment of the present invention, preferably, at least one of R¹ and R³ is an alkyl group, more preferably an alkyl group having 1 to 3 carbon atoms, and is especially preferably a methyl group from the viewpoint of viscosity characteristics. Further, from the same reason as above, preferably, both R¹ and R³ are alkyl groups, especially preferably methyl groups.

R² in the general formula (I) is an alkylene group having 2 to 4 carbon atoms, and the oxyalkylene group of the recurring unit includes an oxyethylene group, an oxypropylene group and an oxybutylene group. The oxyalkylene groups in one molecule may be the same, or two or more kinds of oxyalkylene groups may be contained, but preferably at least an oxypropylene unit is contained in one molecule, more preferably an oxypropylene unit is contained in a ratio of 50 mol% or more in the oxyalkylene unit.
n in the general formula (I) is an integer of 1 to 6, and is defined depending on the valence of R¹. For example, in the case where R¹ is an alkyl group or an acyl group, n is 1, and in the case where R¹ is a divalent, trivalent, tetravalent, pentavalent or hexavalent aliphatic hydrocarbon group, n is 2, 3, 4, 5 or 6, respectively. m represents a number that makes an average value of m × n 6 to 80. When the average value falls within the range, compatibility with the refrigerant can be readily bettered.

Among the polyoxyalkylene glycols represented by the general formula (I), a polyoxypropylene glycol dimethyl ether represented by a general formula (I-a) (where x is a number of 6 to 80) is preferred.

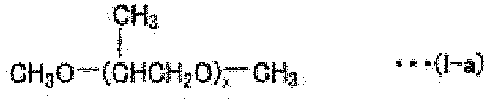

Also a polyoxyethylene polyoxypropylene glycol dimethyl ether represented by a general formula (I-b) (where a and b each are 1 or more and are a number to make the total thereof 6 to 80) is preferred. 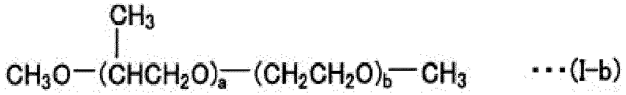 As the polyoxyalkylene glycols represented by the above general formula (I), those described in detail in JP 2-305893A can be used.

In one embodiment of the present invention, one alone or two or more kinds of the polyoxyalkylene glycols can be used either singly or as combined.

The polyoxyalkylene glycol derivatives can be obtained, for example, by polymerizing an alkylene oxide having 2 to 4 carbon atoms, such as ethylene oxide or propylene oxide, using water or an alkali hydroxide as an initiator to give a polyoxyalkylene glycol having a hydroxy group at both terminals and then etherifying or esterifying the hydroxy groups at both terminals using an alkyl halide or an acyl halide.

Also they may be obtained by polymerizing an alkylene oxide having 2 to 4 carbon atoms using a monohydric alcohol having 1 to 10 carbon atoms or an alkali metal salt thereof as an initiator to give a polyoxyalkylene glycol monoalkyl ether having an ether bond at one terminal and having a hydroxy group at the other terminal, and etherifying or esterifying the hydroxy group. In the case where a compound of the general formula (I) where n is 2 or more is produced, a dihydric to hexahydric polyalcohol may be used as an initiator in place of the monohydric alcohol.

In the case where a polyoxyalkylene glycol derivative is produced according to the above-mentioned methods, and where the amount of the alkyl halide or the acyl halide is less than the stoichiometric amount in the proportion of the alkyl halide or the acyl halide to the polyoxyalkylene glycol in the etherification or the esterification reaction, a hydroxy group may remain to increase the hydroxyl value of the resultant derivative. Consequently, preferably, the molar ratio of the alkyl halide or the acyl halide to the polyoxyalkylene glycol is defined in consideration of the stoichiometric amount. By carrying out the polymerization, the etherification and the esterification in an inert gas atmosphere, discoloration can be prevented.

### ((Polyvinyl Ethers))

Examples of the polyvinyl ethers usable as the base oil that the lubricating oil composition for refrigerators of the present invention contains include polyvinyl ether compounds having a structural unit represented by a general formula (II).

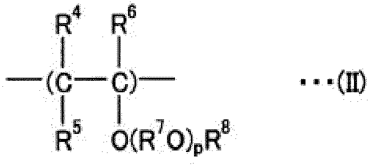

R⁴, R⁵ and R⁶ in the above general formula (II) each represent a hydrogen atom or a hydrocarbon group having 1 to 8 carbon atoms, and they may be same as or different from each other. Here, specifically, the hydrocarbon group indicates an alkyl group such as a methyl group, an ethyl group, an n-propyl group, an isopropyl group, an n-butyl group, an isobutyl group, a sec-butyl group, a tert-butyl group, various pentyl groups, various hexyl groups, various heptyl groups and various octyl groups; a cycloalkyl group such as a cyclopentyl group, a cyclohexyl group, various methylcyclohexyl groups, various ethylcyclohexyl group, and various dimethylcyclohexyl groups; an aryl group such as a phenyl group, various methylphenyl groups, various ethylphenyl groups and various dimethylphenyl groups; and an arylalkyl group such as a benzyl group, various phenylethyl groups and various methylbenzyl groups. Preferably, these R⁴, R⁵ and R⁶ each are a hydrogen atom or a hydrocarbon group having 3 or less carbon atoms.

On the other hand, R⁷ in the general formula (II) represents a divalent hydrocarbon group having 2 to 10 carbon atoms. Here, specifically, the divalent hydrocarbon group having 2 to 10 carbon atoms includes a divalent aliphatic hydrocarbon group such as an ethylene group, a phenylethylene group, a 1,2-propylene group, a 2-phenyl-1,2-propylene group, a 1,3-propylene group, various butylene groups, various pentylene groups, various hexylene groups, various heptylene groups, various octylene groups, various nonylene groups, and various decylene groups; a divalent alicyclic hydrocarbon group having two bonding sites in an alicyclic hydrocarbon such as cyclohexane, methylcyclohexane, ethylcyclohexane, dimethylcyclohexane, and propylcyclohexane; a divalent aromatic hydrocarbon group such as various phenylene groups, various methylphenylene groups, various ethylphenylene groups, various dimethylphenylene groups, and various naphthylene groups; an alkyl-aromatic hydrocarbon group having a monovalent bonding site in each of the alkyl group moiety and the aromatic moiety of an alkyl-aromatic hydrocarbon such as toluene and ethylbenzene; and an alkyl-aromatic hydrocarbon group having a bonding site in the alkyl group moiety of a polyalkyl-aromatic hydrocarbon such as xylene and diethylbenzene. Among these, an aliphatic hydrocarbon group having 2 to 4 carbon atoms is especially preferred. Plural R⁷O's may be the same or different.

p in the general formula (II) indicates a number of repetitions, and is a number that makes an average value thereof fall within a range of 0 to 10, preferably 0 to 5.

R⁸ in the general formula (II) represents a hydrocarbon group having 1 to 10 carbon atoms, and specifically, the hydrocarbon group includes an alkyl group such as a methyl group, an ethyl group, an n-propyl group, an isopropyl group, an n-butyl group, an isobutyl group, a sec-butyl group, a tert-butyl group, various pentyl groups, various hexyl groups, various heptyl groups, various octyl groups, various nonyl groups and various decyl groups; a cycloalkyl group such as a cyclopentyl group, a cyclohexyl group, various methylcyclohexyl groups, various ethylcyclohexyl group, various propylcyclohexyl groups and various dimethylcyclohexyl groups; an aryl group such as a phenyl group, various methylphenyl groups, various ethylphenyl groups, various dimethylphenyl groups, various propylphenyl groups, various trimethylphenyl groups, various butylphenyl groups and various naphthyl groups; and an arylalkyl group such as a benzyl group, various phenylethyl groups, various methylbenzyl groups, various phenylpropyl groups and various phenylbutyl groups. Among these, a hydrocarbon group having 8 or less carbon atoms is preferred. When p is 0, an alkyl group having 1 to 6 carbon atoms is especially preferred, and when p is 1 or more, an alkyl group having 1 to 4 carbon atoms is especially preferred.

The polyvinyl ether compounds can be produced by polymerizing a corresponding vinyl ether monomer. The vinyl ether monomer usable here is one represented by a general formula (III) (where R⁴, R⁵, R⁶, R⁷, R⁸ and p are the same as mentioned above).

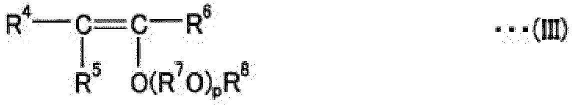

The vinyl ether monomer includes various compounds corresponding to the above-mentioned polyvinyl ether compounds, and examples thereof include vinyl methyl ether, vinyl ethyl ether, vinyl n-propyl ether, vinyl isopropyl ether, vinyl n-butyl ether, vinyl isobutyl ether, vinyl sec-butyl ether, vinyl tert-butyl ether, vinyl n-pentyl ether, vinyl n-hexyl ether, vinyl 2-methoxyethyl ether, vinyl 2-ethoxyethyl ether, vinyl 2-methoxy-1-methylethyl ether, vinyl 2-methoxypropyl ether, vinyl 3,6-dioxaheptyl ether, vinyl 3,6,9-trioxadecyl ether, vinyl 1,4-dimethyl-3,6-dioxaheptyl ether, vinyl 1,4,7-trimethyl-3,6,9-trioxadecyl ether, vinyl 2,6-dioxa-4-heptyl ether, vinyl 2,6,9-trioxa-4-decyl ether, 1-methoxypropene, 1-ethoxypropene, 1-n-propoxypropene, 1-isopropoxypropene, 1-n-butoxypropene, 1-isobutoxypropene, 1-sec-butoxypropene, 1-tert-butoxypropene, 2-methoxypropene, 2-ethoxypropene, 2-n-propoxypropene, 2-isopropoxypropene, 2-n-butoxypropene, 2-isobutoxypropene, 2-sec-butoxypropene, 2-tert-butoxypropene, 1-methoxy-1-butene, 1-ethoxy-1-butene, 1-n-propoxy-1-butene, 1-isopropoxy-1-butene, 1-n-butoxy-1-butene, 1-isobutoxy-1-butene, 1-sec-butoxy-1-butene, 1-tert-butoxy-1-butene, 2-methoxy-1-butene, 2-ethoxy-1-butene, 2-n-propoxy-1-butene, 2-isopropoxy-1-butene, 2-n-butoxy-1-butene, 2-isobutoxy-1-butene, 2-sec-butoxy-1-butene, 2-tert-butoxy-1-butene, 2-methoxy-2-butene, 2-ethoxy-2-butene, 2-n-propoxy-2-butene, 2-isopropoxy-2-butene, 2-n-butoxy-2-butene, 2-isobutoxy-2-butene, 2-sec-butoxy-2-butene, and 2-tert-butoxy-2-butene. These vinyl ether monomers can be produced according to known methods.

In the polyvinyl ether compound having a structural unit represented by the general formula (II) to be used as the base oil that the lubricating oil composition for refrigerators of the present invention contains, the terminal can be converted into a desired structure according to the method shown in the present specification or according to known methods. The group to be converted includes a saturated hydrocarbon group, an ether group, an alcohol group, a ketone group, an amide group, and a nitrile group.

Preferred examples of the polyvinyl ether compound usable as the base oil that the lubricating oil composition for refrigerators of the present invention contains include those having terminal structures mentioned below. Specifically,
(1) One terminal is represented by a general formula (IV): 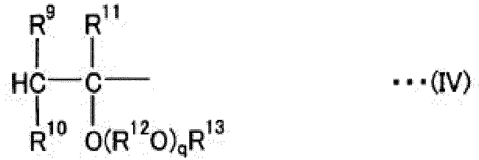 wherein R⁹, R¹⁰ and R¹¹ each represent a hydrogen atom or a hydrocarbon group having 1 to 8 carbon atoms, and these may be the same as or different from each other; R¹² represents a divalent hydrocarbon group having 2 to 10 carbon atoms; R¹³ represents a hydrocarbon group having 1 to 10 carbon atoms; q represents a number of 0 to 10 as a mean value; in the case where the formula has plural R¹²O's, those plural R¹²O's may be the same as or different from each other;
   and the remaining terminal has a structure of a general formula (V): 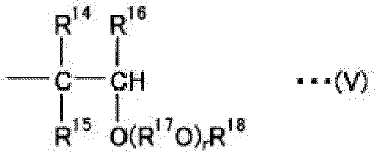 wherein R¹⁴, R¹⁵ and R¹⁶ each represent a hydrogen atom or a hydrocarbon group having 1 to 8 carbon atoms, and these may be the same as or different from each other; R¹⁷ represents a divalent hydrocarbon group having 2 to 10 carbon atoms; R¹⁸ represents a hydrocarbon group having 1 to 10 carbon atoms; r represents a number of 0 to 10 as a mean value; in the case where the formula has plural R¹⁷O's, those plural R¹⁷O's may be the same as or different from each other;
(2) One terminal is represented by the above-mentioned general formula (IV), and the remaining terminal has a structure of a general formula (VI): 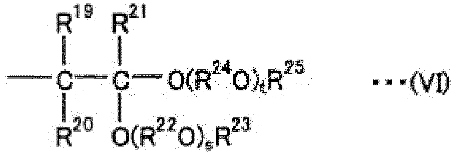 wherein R¹⁹, R²⁰ and R²¹ each represent a hydrogen atom or a hydrocarbon group having 1 to 8 carbon atoms, and these may be the same as or different from each other; R²² and R²⁴ each represents a divalent hydrocarbon group having 2 to 10 carbon atoms, and these may be the same as or different from each other; R²³ and R²⁵ each represent a hydrocarbon group having 1 to 10 carbon atoms, and these may be the same as or different from each other; s and t each represent a number of 0 to 10 as an average value, and these may be the same as or different from each other; in the case where the formula has plural R²²O's, those plural R²²O's may be the same as or different from each other; in the case where the formula has plural R²⁴O's, those plural R²⁴O's may be the same as or different from each other;
(3) One terminal is represented by the general formula (IV), and the remaining terminal has an olefinic unsaturated bond;
(4) One terminal is represented by the general formula (IV), and the remaining terminal has a structure represented by a general formula (VII): 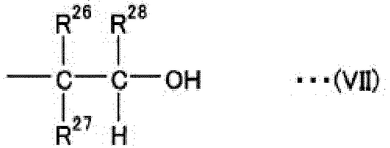 wherein R²⁶, R²⁷ and R²⁸ each represent a hydrogen atom or a hydrocarbon group having 1 to 8 carbon atoms, and these may be the same as or different from each other.

A mixture of the polyvinyl ether compounds may be a mixture of two or more selected from those having a terminal structure of the above (1) to (4). Preferred examples of such a mixture include a mixture of (1) and (4), and a mixture of (2) and (3).

In one embodiment of the present invention, the polyvinyl ether compound having a structural unit represented by the general formula (II) is preferably a polyethyl vinyl ether where R⁴, R⁵ and R⁶ are all hydrogen atoms, p is 0 and R⁸ is an ethyl group, from the viewpoint of solubility for the refrigerant and reduction in the hydroxyl value.

Also from the same viewpoint, the polyvinyl ether compound having a structural unit represented by the general formula (II) is preferably a copolymer of a polyethyl vinyl ether where R⁴, R⁵ and R⁶ are all hydrogen atoms, p is 0 and R⁸ is an ethyl group, and a polyisobutyl vinyl ether where R⁴, R⁵ and R⁶ are all hydrogen atoms, p is 0 and R⁸ is an isobutyl group. In that case, the content ratio of the structural unit of ethyl vinyl ether to the structural unit of isobutyl vinyl ether [(structural unit of ethyl vinyl ether)/(structural unit of isobutyl vinyl ether)] is preferably 50/50 to 99/1 as a molar ratio, more preferably 70/30 to 99/1, even more preferably 80/20 to 95/5, further more preferably 85/5 to 95/5.

For the polyvinyl ether compound, preferably, the raw material, the initiator and the reaction condition are so selected as to produce a polyvinyl ether compound having a preferred viscosity range. Even a polymer having a kinematic viscosity falling outside the above-mentioned range can be controlled to have a kinematic viscosity falling within the range, by mixing it with any other polymer having a different kinematic viscosity.

In producing the polyvinyl ether compound in one embodiment of the present invention, preferably, unreacted raw materials are removed in a purification step from the viewpoint of facilitating hydroxyl value control.

In the present invention, one alone or two or more kinds of the polyvinyl ether compound can be used either singly or as combined.

### ((Copolymer of poly(oxy)alkylene glycol or monoether thereof and polyvinyl ether))

The copolymer of a poly(oxy)alkylene glycol or a monoether thereof and a polyvinyl ether usable as the base oil that the lubricating oil composition for refrigerators of the present invention contains includes copolymers represented by a general formula (VIII) and a general formula (IX) (hereinafter each referred to as a polyvinyl ether copolymer I and a polyvinyl ether copolymer II, respectively).

Poly(oxy)alkylene glycol indicates both a polyalkylene glycol and a polyoxyalkylene glycol.

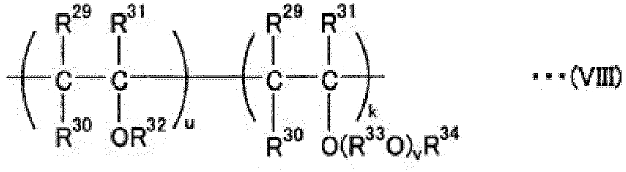

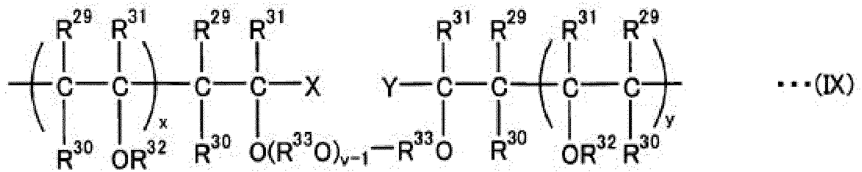

R²⁹, R³⁰ and R³¹ in the general formula (VIII) each represents a hydrogen atom or a hydrocarbon group having 1 to 8 carbon group, and these may be the same as or different from each other; R³³ represents a divalent hydrocarbon group having 2 to 4 carbon atoms; R³⁴ represents an aliphatic hydrocarbon group or alicyclic hydrocarbon group having 1 to 20 carbon group, an aromatic hydrocarbon group having 1 to 20 carbon atoms and optionally having a substituent, an acyl group having 2 to 20 carbon group, or an oxygen-containing hydrocarbon group having 2 to 50 carbon atoms; R³² represents a hydrocarbon group having 1 to 10 carbon atoms; and plural R³⁴, R³³ and R³², if any, each may be the same as or different from each other.

Here, the hydrocarbon group having 1 to 8 carbon atoms of R²⁹ to R³¹ specifically includes an alkyl group such as a methyl group, an ethyl group, an n-propyl group, an isopropyl group, an n-butyl group, an isobutyl group, a sec-butyl group, a tert-butyl group, various pentyl groups, various hexyl groups, various heptyl groups and various octyl groups; an aryl group such as a cyclopentyl group, a cyclohexyl group, various methylcyclohexyl groups, various ethylcyclohexyl groups, various dimethylcyclohexyl groups, and various dimethylphenyl groups; and an arylalkyl group such as a benzyl group, various phenylethyl groups, and various methylbenzyl groups. Preferably, R²⁹, R³⁰ and R³¹ each are a hydrogen atom.

On the other hand, the divalent hydrocarbon group having 2 to 4 carbon atoms represented by R³³ includes a divalent alkylene group such as a methylene group, an ethylene group, a propylene group, a trimethylene group, and various butylene groups.
v in the formula (VIII) indicates a number of repetitions of R³³O, and is a number of 1 to 50, preferably 1 to 20, more preferably 1 to 10, even more preferably 1 to 5, as an average value. In the case where the formula has plural R³³O's, those plural R³³O's may be the same or different.
k represents a number of 1 to 50, preferably 1 to 10, more preferably 1 to 2, even more preferably 1; u represents a number of 0 to 50, preferably 2 to 25, more preferably 5 to 15, and in the case where the formula has plural k's and u's, they may form block units or random units.

R³⁴ in the general formula (VIII) is preferably an alkyl group having 1 to 10 carbon atoms, an acyl group having 2 to 10 carbon atoms, or an oxygen-containing hydrocarbon group having 2 to 50 carbon atoms.

The alkyl group having 1 to 10 carbon atoms specifically includes a methyl group, an ethyl group, an n-propyl group, an isopropyl group, a n-butyl group, an isobutyl group, a sec-butyl group, a tert-butyl group, various pentyl groups, various hexyl groups, various heptyl groups, various octyl groups, various nonyl groups, various decyl groups, a cyclopentyl group, a cyclohexyl group, various methylcyclohexyl groups, various ethylcyclohexyl groups, various propylcyclohexyl groups, and various dimethylcyclohexyl groups.

The acyl group having 2 to 10 carbon atoms include an acetyl group, a propionyl group, a butyryl group, an isobutyryl group, a valeryl group, an isovaleryl group, a pivaloyl group, a benzoyl group and a toluoyl group.

Specifically, preferred examples of the oxygen-containing hydrocarbon group having 2 to 50 carbon atoms include a methoxymethyl group, a methoxyethyl group, a methoxypropyl group, a 1,1-bismethoxypropyl group, a 1,2-bismethoxypropyl group, an ethoxypropyl group, a (2-methoxyethoxy)propyl group, a (1-methyl-2-methoxy)propyl group.

The hydrocarbon group having 1 to 10 carbon atoms represented by R³² in the general formula (VIII) specifically includes an alkyl group such as a methyl group, an ethyl group, an n-propyl group, an isopropyl group, an n-butyl group, an isobutyl group, various pentyl groups, various hexyl groups, various heptyl groups, various octyl groups, various nonyl groups, and various decyl groups; a cycloalkyl group such as a cyclopentyl group, a cyclohexyl group, various methylcyclohexyl groups, various ethylcyclohexyl groups, various propylcyclohexyl groups, and various dimethylcyclohexyl groups; an aryl group such as a phenyl group, various methylphenyl groups, various ethylphenyl groups, various dimethylphenyl groups, various propylphenyl groups, various trimethylphenyl groups, various butylphenyl groups, and various naphthyl groups; and an arylalkyl group such as a benzyl group, various phenylethyl groups, various methylbenzyl groups, various phenylpropyl groups, and various phenylbutyl groups.

R²⁹ to R³¹, R³⁴, R³³, v and R²⁹ to R³² each may be the same or different in each structural unit.

The polyvinyl ether copolymer I having a structural unit represented by the general formula (VIII) is, as it has a copolymer form, effective for improving lubricity, insulation performance and moisture absorbability while satisfying compatibility. In that case, by selecting the kind of the monomer to be a raw material, the kind of the initiator and the ratio of copolymerization, the above-mentioned performance of an oily agent can be made to reach the intended level. Accordingly, the present invention is effective for obtaining an oily agent that can meet different requirements such as lubricity and compatibility, depending on the model or the material of the lubrication parts of compressors in refrigerator systems or air-conditioner systems, or on the refrigeration ability and the kind of refrigerant, in any desired manner.

On the other hand, in the polyvinyl ether copolymer II represented by the general formula (IX), R²⁹ to R³², R³³ and v are the same as above. In the case where the formula has plural R³³'s and R³²'s, they each may be the same or different. x and y each represent a number of 1 to 50, and in the case where the formula has plural x's and y's, they may form block units or random units. X and Y each independently represent a hydroxy group, or a hydrocarbon group having 1 to 20 carbon atoms.

Regarding the production method for the polyvinyl ether copolymer I represented by the general formula (VIII), any method capable of producing the copolymer can be employed with no specific limitation. For example, the copolymer can be produced according to the following production methods 1 to 3.

### (Production Method 1 for polyvinyl ether copolymer I)

In the production method 1, a poly(oxy)alkylene glycol represented by a general formula (X):

R³⁴-(OR³³)ᵥ-OH (X)

wherein R³³, R³⁴ and v are the same as above, is used as an initiator, and a vinyl ether compound represented by a general formula (XI): 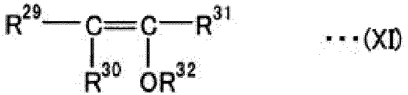 wherein R²⁹ to R³² are the same as above, is polymerized to give a polyvinyl ether copolymer I.

Examples of the poly(oxy)alkylene glycol compound represented by the general formula (X) include (oxy)alkylene glycol monoethers such as ethylene glycol monomethyl ether, diethylene glycol monomethyl ether, triethylene glycol monomethyl ether, propylene glycol monomethyl ether, dipropylene glycol monomethyl ether, and tripropylene glycol monomethyl ether.

Examples of the vinyl ether compound represented by the general formula (XI) include vinyl ethers such as vinyl methyl ether, vinyl ethyl ether, vinyl n-propyl ether, vinyl isopropyl ether, vinyl n-butyl ether, vinyl isobutyl ether, vinyl sec-butyl ether, vinyl tert-butyl ether, vinyl n-pentyl ether, and vinyl n-hexyl ether; propenes such as 1-methoxypropene, 1-ethoxypropene, 1-n-propoxypropene, 1-isopropoxypropene, 1-n-butoxypropene, 1-isobutoxypropene, 1-sec-butoxypropene, 1-tert-butoxypropene, 2-methoxypropene, 2-ethoxypropene, 2-n-propoxypropene, 2-isopropoxypropene, 2-n-butoxypropene, 2-isobutoxypropene, 2-sec-butoxypropene, and 2-tert-butoxypropene; and butenes such as 1-methoxy-1-butene, 1-ethoxy-1- butene, 1-n-propoxy-1-butene, 1-isopropoxy-1-butene, 1-n-butoxy-1-butene, 1-isobutoxy-1-butene, 1-sec-butoxy-1-butene, 1-tert-butoxy-1-butene, 2-methoxy-1-butene, 2-ethoxy-1-butene, 2-n-propoxy-1-butene, 2-isopropoxy-1-butene, 2-n-butoxy-1-butene, 2-isobutoxy-1-butene, 2-sec-butoxy-1-butene, 2-tert-butoxy-1-butene, 2-methoxy-2-butene, 2-ethoxy-2-butene, 2-n-propoxy-2-butene, 2-isopropoxy-2-butene, 2-n-butoxy-2-butene, and 2-tert-butoxy-2-butene. These vinyl ether monomers can be produced according to known methods.

### (Production Method 2 for polyvinyl ether copolymer I)

In the production method 2, an acetal compound represented by a general formula (XII): 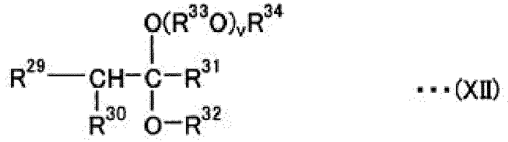 wherein R²⁹ to R³⁴ and v are the same as above, is used as an initiator, and a vinyl ether compound represented by the above-mentioned general formula (XI) is polymerized to give a polyvinyl ether copolymer I.

Examples of the acetal compound represented by the general formula (XII) include acetaldehyde methyl(2-methoxyethyl) acetal, acetaldehyde ethyl(2-methoxyethyl) acetal, acetaldehyde methyl(2-methoxy-1-methylethyl) acetal, acetaldehyde ethyl(2-methoxy-1-methylethyl) acetal, acetaldehyde methyl[2-(2-methoxyethoxy)ethyl] acetal, acetaldehyde ethyl[2-(2-methoxyethoxy)ethyl] acetal, acetaldehyde methyl[2-(2-methoxyethoxy)-1-methylethyl] acetal, and acetaldehyde ethyl[2-(2-methoxyethoxy)-1-methylethyl] acetal.

The acetal compound represented by the general formula (XII) can also be produced, for example, by reacting one molecule of a poly(oxy)alkylene glycol compound represented by the general formula (X) and one molecule of a vinyl ether compound represented by the general formula (XI). The resultant acetal compound can be used as an initiator, after isolated or directly as it is.

### (Production Method 3 for polyvinyl ether copolymer I)

In the production method 3, an acetal compound represented by a general formula (XIII): 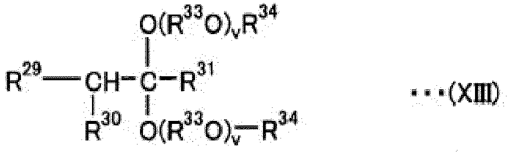 wherein R²⁹ to ³¹, R³³, R³⁴ and v are the same as above, is used as an initiator, and a vinyl ether compound represented by the above-mentioned general formula (XI) is polymerized to give a polyvinyl ether copolymer I.

Examples of the acetal compound represented by the general formula (XIII) include acetaldehyde di(2-methoxyethyl) acetal, acetaldehyde di(2-methoxy-1-methylethyl) acetal, acetaldehyde di[2-(2-methoxyethoxy)ethyl] acetal, and acetaldehyde di[2-(2-methoxyethoxy)-1-methylethyl] acetal.

The acetal compound represented by the general formula (XIII) can also be produced, for example, by reacting one molecule of a poly(oxy)alkylene glycol compound represented by the general formula (X) and one molecule of vinyl ether compound represented by a general formula (XIV): 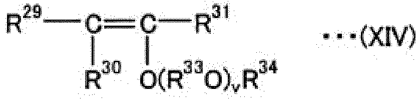 wherein R²⁹ to R³¹, R³³, R³⁴ and v are the same as above. The resultant acetal compound can be used as an initiator, after isolated or directly as it is.

The vinyl ether copolymer I represented by the general formula (VIII) can be a polyvinyl ether copolymer I, in which one terminal is represented by a general formula (XV) or (XVI): 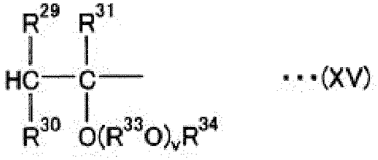 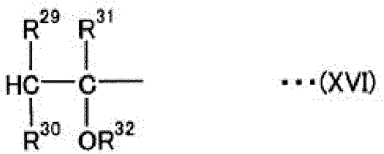 wherein R²⁹ to R³⁴ and v are the same as above, and the remaining terminal has a structure represented by a general formula (XVII) or a general formula (XVIII): 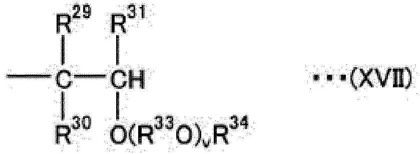 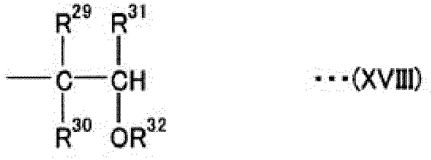 wherein R²⁹ to R³⁴ and v are the same as above.

Among such polyvinyl ether copolymers I, those mentioned below are especially preferred as the base oil that the lubricating oil composition for refrigerators of the present invention contains.
(1) Those in which one terminal is represented by the general formula (XV) or (XVI) and the remaining terminal has a structure represented by the general formula (XVII) or (XVIII), and R²⁹, R³⁰ and R³¹ in the general formula (VIII) are all hydrogen atoms, v is a number of 1 to 4, R³³ is a divalent hydrocarbon group having 2 to 4 carbon atoms, R³⁴ is an alkyl group having 1 to 10 carbon atoms, and R³² is a hydrocarbon group having 1 to 10 carbon atoms.
(2) Those in which one terminal is represented by the general formula (XV) and the remaining terminal has a structure represented by the general formula (XVIII), and R²⁹, R³⁰ and R³¹ in the general formula (VIII) are all hydrogen atoms, v is a number of 1 to 4, R³³ is a divalent hydrocarbon group having 2 to 4 carbon atoms, R³⁴ is an alkyl group having 1 to 10 carbon atoms, and R³² is a hydrocarbon group having 1 to 10 carbon atoms.
(3) Those in which one terminal is represented by the general formula (XVI) and the remaining terminal has a structure represented by the general formula (XVII), and R²⁹, R³⁰ and R³¹ in the general formula (VIII) are all hydrogen atoms, v is a number of 1 to 4, R³³ is a divalent hydrocarbon group having 2 to 4 carbon atoms, R³⁴ is an alkyl group having 1 to 10 carbon atoms, and R³² is a hydrocarbon group having 1 to 10 carbon atoms.

On the other hand, the production method for the polyvinyl ether copolymer II repented by the general formula (IX) may be any method capable of producing the copolymer with no specific limitation, but the copolymer can be efficiently produced according to the following method.

### (Production Method for polyvinyl ether copolymer II)

The polyvinyl ether copolymer II represented by the general formula (IX) can be produced by polymerizing a vinyl ether compound represented by the general formula (XI), using a poly(oxy)alkylene glycol represented by a general formula (XIX):

HO-(R³³O)ᵥ-H (XIX)

wherein R³³ and v are the same as above, as an initiator.

Examples of the poly(oxy)alkylene glycol represented by the general formula (XIX) include ethylene glycol, diethylene glycol, triethylene glycol, polyethylene glycol, propylene glycol, dipropylene glycol, and polypropylene glycol.

In the present invention, one alone or two or more kinds of the copolymer of a poly(oxy)alkylene glycol or a monoether thereof and a polyvinyl ether can be used either singly or as combined.

### ((Polyol Esters))

As the polyol esters usable as the base oil that the lubricating oil composition for refrigerators of the present invention contains, preferred are esters of a diol or a polyol having approximately 3 to 20 hydroxy groups, and a fatty acid having approximately 1 to 24 carbon atoms.

Here, examples of the diol include ethylene glycol, 1,3-propanediol, propylene glycol, 1,4-butanediol, 1,2-butanediol, 2-methyl-1,3-propanediol, 1,5-pentanediol, neopentyl glycol, 1,6-hexanediol, 2-ethyl-2-methyl-1,3-propanediol, 1,7-heptanediol, 2-methyl-2-propyl-1,3-propanediol, 2,2-diethyl-1,3-propanediol, 1,8-octanediol, 1,9-nonanediol, 1,10-decanediol, 1,11-undecanediol, and 1,12-dodecanediol.

Examples of the polyol include polyhydric alcohols, such as trimethylolethane, trimethylolpropane, trimethylolbutane, di-(trimethylolpropane), tri-(trimethylolpropane), pentaerythritol, di-(pentaerythritol), tri-(pentaerythritol), glycerin, polyglycerin (e.g., dimer to icosamer of glycerin), 1,3,5-pentanetriol, sorbitol, sorbitan, sorbitol-glycerin condensate, adonitol, arabitol, xylitol, and mannitol; saccharides, such as xylose, arabinose, ribose, rhamnose, glucose, fructose, galactose, mannose, sorbose, cellobiose, maltose, isomaltose, trehalose, sucrose, raffinose, gentianose, and melenzitose; as well as partially esterified derivatives and methyl glucosides (glycosides) thereof. Of these polyols, preferred are hindered alcohols, such as neopentyl glycol, trimethylolethane, trimethylolpropane, trimethylolbutane, di-(trimethylolpropane), tri-(trimethylolpropane), pentaerythritol, di-(pentaerythritol), and tri-(pentaerythritol).

The carbon number of the fatty acid is not specifically limited, but in general, those having 1 to 24 carbon atoms are used. Among the fatty acids having 1 to 24 carbon atoms, those having 3 or more carbon atoms are preferred from the viewpoint of lubricity, those having 4 or more carbon atoms are more preferred, those having 5 or more carbon atoms are even more preferred, and those having 10 or more carbon atoms are most preferred. Also from the viewpoint of compatibility with the refrigerant, those having 18 or less carbon atoms are preferred, those having 12 or less carbon atoms are more preferred, and those having 9 or less carbon atoms are even more preferred.

The fatty acid may be any of a linear fatty acid or a branched fatty acid. From the viewpoint of lubricity, a linear fatty acid is preferred, and from the viewpoint of hydrolysis stability, a branched fatty acid is preferred. Further, the fatty acid may be any of a saturated fatty acid or an unsaturated fatty acid.

Specifically, examples of the fatty acid include linear fatty acids or branched fatty acids, such as pentanoic acid, hexanoic acid, heptanoic acid, octanoic acid, nonanoic acid, decanoic acid, undecanoic acid, dodecanoic acid, tridecanoic acid, tetradecanoic acid, pentadecanoic acid, hexadecanoic acid, heptadecanoic acid, octadecanoic acid, nonadecanoic acid, eicosanoic acid, and oleic acid; and so-called neo acids in which the α-carbon atom is quaternized. More specifically, valeric acid (n-pentanoic acid), caproic acid (n-hexanoic acid), enanthic acid (n-heptanoic acid), caprylic acid (n-octanoic acid), pelargonic acid (n-nonanoic acid), capric acid (n-decanoic acid), oleic acid (cis-9-octadecenoic acid), isopentanoic acid (3-methylbutanoic acid), 2-methylhexanoic acid, 2-ethylpentanoic acid, 2-ethylhexanoic acid, and 3,5,5-trimethylhexanoic acid are preferred.

The polyol ester may be a partial ester in which all hydroxy groups of a polyol are not esterified but remain as such, or a complete ester in which all hydroxy groups are esterified, or may also be a mixture of a partial ester and a complete ester, but is preferably a complete ester.

Of the polyol esters, from the viewpoint of more excellent hydrolysis stability, an ester of a hindered alcohol, such as neopentyl glycol, trimethylolethane, trimethylolpropane, trimethylolbutane, di-(trimethylolpropane), tri-(trimethylolpropane), pentaerythritol, di-(pentaerythritol), and tri-(pentaerythritol), is preferred; and an ester of neopentyl glycol, trimethylolethane, trimethylolpropane, trimethylolbutane or pentaerythritol is more preferred. From the viewpoint of still more excellent compatibility with the refrigerant and hydrolysis stability, an ester of pentaerythritol is most preferred.

Preferred examples of the polyol ester include a diester of neopentyl glycol with at least one fatty acid selected from the group consisting of valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid, and 3,5,5-trimethylhexanoic acid; a triester of trimethylolethane with at least one fatty acid selected from the group consisting of valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid, and 3,5,5-trimethylhexanoic acid; a triester of trimethylolpropane with at least one fatty acid selected from the group consisting of valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid, and 3,5,5-trimethylhexanoic acid; a triester of trimethylolbutane with at least one fatty acid selected from the group consisting of valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid, and 3,5,5-trimethylhexanoic acid; and a tetraester of pentaerythritol with at least one fatty acid selected from the group consisting of valeric acid, caproic acid, enanthic acid, caprylic acid, pelargonic acid, capric acid, oleic acid, isopentanoic acid, 2-methylhexanoic acid, 2-ethylpentanoic acid, 2-ethylhexanoic acid, and 3,5,5-trimethylhexanoic acid.

An ester with two or more fatty acids may be a mixture prepared by mixing two or more esters in which each ester is formed of one fatty acid and one polyol, or an ester of a mixed fatty acid of two or more fatty acids and a polyol. In particular, an ester of a mixed fatty acid and a polyol is excellent in low-temperature characteristics and compatibility with the refrigerant.

Among the polyol esters, an ester of a polyol with a mixed fatty acid of two or more fatty acids is preferred from the viewpoint of improvement of low-temperature characteristics and compatibility with the refrigerant; an ester of a polyol having 2 to 20 hydroxy groups with a mixed fatty acid of two or more fatty acids each having 3 to 20 carbon atoms is more preferred; an ester of a polyol having 2 to 10 hydroxy groups with a mixed fatty acid of two or more fatty acids each having 5 to 15 carbon atoms is even more preferred; and an ester of a polyol having 2 to 6 hydroxy groups with a mixed fatty acid of two or more fatty acids each having 7 to 12 carbon atoms is further more preferred.

In producing the polyol ester compound, esterification in an inert gas atmosphere can prevent discoloration. Regarding the ratio of the polyalcohol to the aliphatic monocarboxylic acid to be reacted, when the amount of the aliphatic monocarboxylic acid is less than the stoichiometric amount, hydroxy groups may remain to increase the hydroxyl value of the resultant ester, while on the other hand, when the amount is more than the stoichiometric amount, carboxy groups may remain to increase the acid value thereof and the pH of the extracted water lowers. Accordingly, the molar ratio of the polyalcohol and the aliphatic monocarboxylic acid is preferably controlled to be optimum, and also preferably, the treatment is so controlled that the amount of the remaining esterification catalyst (ash) could be as small as possible.

### (Preferred Embodiment of Base Oil (A))

In the refrigerant oil composition of one embodiment of the present invention, the main component of the base oil is preferably at least one base oil (A1) selected from polyoxyalkylene glycols, polyvinyl ethers, copolymers of a poly(oxy)alkylene glycol or a monoether thereof and a polyvinyl ether, and polyol esters.

The base oil (A1) may be a base oil (A1-1) of polyoxyalkylene glycols, polyvinyl ethers, copolymers of a poly(oxy)alkylene glycol or a monoether thereof and a polyvinyl ether, and polyol esters, or may be a base oil (A1-2) of three kinds selected from the group consisting of polyoxyalkylene glycols, polyvinyl ethers, copolymers of a poly(oxy)alkylene glycol or a monoether thereof and a polyvinyl ether, and polyol esters, or may be a base oil (A1-3) of two kinds selected from polyoxyalkylene glycols, polyvinyl ethers, copolymers of a poly(oxy)alkylene glycol or a monoether thereof and a polyvinyl ether, and polyol esters, or may be a base oil (A1-4) of only one kind selected from polyoxyalkylene glycols, polyvinyl ethers, copolymers of a poly(oxy)alkylene glycol or a monoether thereof and a polyvinyl ether, and polyol esters.

Namely, the base oil (A1-4) may be a polyoxyalkylene glycol alone, or a polyvinyl ether alone, or a copolymer of a poly(oxy)alkylene glycol or a monoether thereof and a polyvinyl ether alone, or a polyol ester alone.

In the present specification, "main component" means a component having a highest content.

In the base oil, the content of the base oil (A1), the base oil (A1-1), the b base oil (A1-2), the base oil (A1-3) or the base oil (A1-4) is preferably 50 to 100% by mass based on the total amount (100% by mass) of the base oil, more preferably 60 to 100% by mass, even more preferably 70 to 100% by mass, further more preferably 80 to 100% by mass, further more preferably 90 to 100% by mass, further more preferably 100% by mass.

### <Physical Properties of Base Oil>

### (Kinematic Viscosity at 100°C)

The kinematic viscosity at 100°C(hereinafter also referred to as "100°C kinematic viscosity") of the base oil that the lubricating oil composition for refrigerators of one embodiment of the present invention contains is preferably 1 mm²/s or more and 50 mm²/s or less, more preferably 3 mm²/s or more and 40 mm²/s or less, even more preferably 4 mm²/s or more and 30 mm²/s or less. When the kinematic viscosity is 1 mm²/s or more, good lubrication performance (load resistance) can be readily exhibited, and sealing performance can be readily bettered. When it is 50 mm²/s or less, energy saving performance is also good.

The viscosity index of the base oil that the lubricating oil composition for refrigerators of one embodiment of the present invention contains is preferably 60 or more, more preferably 80 or more. The upper limit of the viscosity index is 300 or so owing to production process restrictions.

When the viscosity index is 60 or more, kinematic viscosity reduction at high temperatures can be prevented.

The 100°C kinematic viscosity and the viscosity index of the base oil are value measured and calculated according to JIS K 2283:2000.

### (Number-Average Molecular Weight)

The number-average molecular weight of the base oil that the lubricating oil composition for refrigerators of one embodiment of the present invention contains is preferably 600 or more and 3000 or less, more preferably 600 or more and 2500 or less, even more preferably 600 or more and 2000 or less. When the number-average molecular weight of the base oil falls within the above range, the lubricating oil composition for refrigerators can readily exhibit desired performance thereof.

The number-average molecular weight of the base oil is a value measured according to the method described in the section of Examples given hereinunder.

### (Volume Resistivity)

The volume resistivity of the base oil that the lubricating oil composition for refrigerators of one embodiment of the present invention contains is, from the viewpoint of preventing current leakage, preferably 1 × 10⁸ Ω·m or more, more preferably 1 × 10⁹ Ω·m or more, even more preferably 1 × 10¹⁰ Ω·m or more.

The volume resistivity of the base oil is a value measured according to JIS C 2101:2010.

### (Acid Value)

The acid value, as measured after a sealed tube test to be mentioned hereinunder, of the base oil that the lubricating oil composition for refrigerators of one embodiment of the present invention contains is preferably less than 1.00 mgKOH/g, more preferably 0.90 mgKOH/g or less, even more preferably 0.80 mgKOH/g or less.

### [Other Additives]

Preferably, the lubricating oil composition for refrigerators of one embodiment of the present invention contains an antioxidant and an acid scavenger within a range not detracting from the advantageous effects of the present invention. Also the composition may contain at least one additive selected from an extreme-pressure agent, an oily agent, a metal deactivator and an anti-foaming agent.

Specifically, the lubricating oil composition for refrigerators of one embodiment of the present invention may contain one or more additives selected from the group consisting of an antioxidant, an acid scavenger, an extreme-pressure agent, an oily agent, a metal deactivator and an anti-foaming agent.

### (Antioxidant)

As the antioxidant, a phenolic antioxidant such as 2,6-di-tert-butyl-4-methylphenol, 2,6-di-tert-butyl-4-ethylphenol, and 2,2'-methylenebis(4-methyl-6-tert-butylphenol), or an amine-type antioxidant such as phenyl-α-naphthylamine and N,N'-diphenyl-p-phenylenediamine is preferably blended. From the viewpoint of effect and economic potential, the antioxidant is blended in the composition in an amount of 0.01 to 5% by mass, more preferably 0.05 to 3% by mass.

### (Acid Scavenger)

Examples of the acid scavenger include epoxy compounds such as phenyl glycidyl ether, alkyl glycidyl ether, alkylene glycol glycidyl ether, cyclohexene oxide, α-olefin oxide, and epoxidated soybean oil. As the acid scavenger, in particular, a least one selected from glycidyl esters, glycidyl ethers and α-olefin oxides is preferably used.

The glycidyl ether includes glycidyl ethers derived from linear, branched or cyclic, saturated or unsaturated aliphatic mono or polyalcohols generally having 3 to 30, preferably 4 to 24, more preferably 6 to 16 carbon atoms, or aromatic compounds having one or more hydroxy groups. In the case of aliphatic polyalcohols or aromatic compounds having 2 or more hydroxy groups, all hydroxy groups are preferably glycidyl-etherified from the viewpoint of stability of the lubricating oil composition and of suppressing hydroxyl value increase.

Among these, especially preferred are glycidyl ether derived from linear, branched or cyclic saturated aliphatic monoalcohols having 6 to 16 carbon atoms. Examples of such glycidyl ethers include 2-ethylethyl glycidyl ether, isononyl glycidyl ether, caprinoyl glycidyl ether, lauryl glycidyl ether, and myristyl glycidyl ether.

On the other hand, as the α-olefin oxide, those having generally 4 to 50, preferably 4 to 24, more preferably 6 to 16 carbon atoms are used.

In the present invention, one alone or two or more kinds of the above-mentioned acid scavengers can be used either singly or as combined. The blending amount thereof is, from the viewpoint of the effect and prevention of sludge formation, generally within a range of 0.005 to 10% by mass based on the total amount of the composition, especially preferably 0.05 to 6% by mass.

### (Extreme-Pressure Agent)

The extreme-pressure agent includes a phosphorus extreme pressure agent, such as a phosphate ester, an acidic phosphate ester, a phosphite ester, an acidic phosphite ester, and amine salts thereof.

Among these phosphorus extreme-pressure agents, tricresyl phosphate, trithiophenyl phosphate, tri(nonylphenyl) phosphite, dioleyl hydrogen phosphite and 2-ethylhexyldiphenyl phosphite are particularly preferred from the viewpoint of extreme-pressure property and frictional characteristics.

The extreme pressure agent also includes a metal salt of a carboxylic acid. The metal salt of a carboxylic acid referred to herein is preferably a metal salt of a carboxylic acid having 3 to 60 carbon atoms, and further a metal salt of a fatty acid having 3 to 30, especially preferably 12 to 30 carbon atoms. The agent also includes a metal salt of a dimer acid or a trimer acid of the above-mentioned fatty acid as well as a metal salt of a dicarboxylic acid having 3 to 30 carbon atoms. Among these, a metal salt of a fatty acid having 12 to 30 carbon atoms and a metal salt of a dicarboxylic acid having 3 to 30 carbon atoms are especially preferred.

On the other hand, the metal to constitute the metal salt is preferably an alkali metal or an alkaline earth metal, especially an alkali metal is most preferred.

Examples of the other extreme-pressure agent than those mentioned above include a sulfur-based extreme-pressure agent such as sulfurized oils and fats, sulfurized fatty acids, sulfurized esters, sulfurized olefins, dihydrocarbyl polysulfides, thiocarbamates, thioterpenes, and dialkylthio dipropionates.

The content of the extreme-pressure agent is, from the viewpoint of lubricity and stability, preferably within a range of 0.001 to 5% by mass based on the total amount of the composition, more preferably 0.005 to 3% by mass. One alone or two or more kinds of the above-mentioned extreme-pressure agents may be used either singly or as combined.

### (Oily Agent)

Examples of the oily agent include an aliphatic saturated or unsaturated monocarboxylic acid, such as stearic acid and oleic acid, a polymerized fatty acid, such as a dimer acid and a hydrogenated dimer acid, a hydroxyfatty acid, such as ricinoleic acid and 12-hydroxystearic acid, an aliphatic saturated or unsaturated monohydric alcohol, such as lauryl alcohol and oleyl alcohol, an aliphatic saturated or unsaturated monoamine, such as stearylamine and oleylamine, an aliphatic saturated or unsaturated monocarboxylic acid amide, such as lauric acid amide and oleic acid amid, and a partial ester of a polyhydric alcohol such as glycerin and sorbitol and an aliphatic saturated or unsaturated monocarboxylic acid.

These compounds may be used solely or as a combination of two or more kinds thereof. The amount thereof blended is preferably selected from a range of 0.01 to 10% by mass, more preferably 0.1 to 5% by mass, based on the total amount of the composition.

### (Metal Deactivator, Anti-Foaming Agent)

Examples of the metal deactivator include a copper inactivator such as N-[N,N'-dialkyl (C3 to C12 alkyl) aminomethyl]triazole; and examples of the anti-foaming agent include silicone oil and fluorosilicone oil.

### [Refrigerator Lubrication Method using the lubricating oil composition for refrigerators of the invention]

The lubricating oil composition for refrigerators of the present invention is used for refrigerators using a refrigerant that contains difluoromethane (R32), trifluoroiodomethane (CF₃I) and at least one compound (α) selected from saturated fluorinated hydrocarbon compounds (HFC) except difluoromethane (R32).

In the refrigerator lubrication method using the lubricating oil composition for refrigerators of the invention, the amount of the refrigerant and that of the lubricating oil composition for refrigerators to be used (in other words, the formulation of the refrigerator composition containing the refrigerant and the lubricating oil composition for refrigerators) is such that the ratio by mass of refrigerant/lubricating oil composition for refrigerators is preferably 99/1 to 10/90, more preferably 95/5 to 20/80, even more preferably 95/5 to 30/70.

When the amount of the refrigerant falls within the above range, the refrigeration performance and the lubrication performance can be readily exhibited. The lubricating oil composition for refrigerators of the invention can be used for various refrigerators, but is especially preferably applicable to compression-type refrigeration cycles of compression-type refrigerators.

### [Refrigerator]

The refrigerator to which the lubricating oil composition for refrigerators of the present invention is applied has a refrigeration cycle including indispensable components of a compressor, a condenser, an expansion mechanism (such as an expansion valve) and an evaporator, or a compressor, a condenser, an expansion mechanism, a drier and an evaporator, in which the above-mentioned lubricating oil composition for refrigerators of the present invention is used as a refrigerator oil and the above-mentioned various refrigerants are used as refrigerants.

### [System using the lubricating oil composition for refrigerators]

The lubricating oil composition for refrigerators or the refrigerator composition of the present invention can be applied, for example, to car air-conditioners, electromotive car air-conditioners, gas heat pumps, air conditioners, refrigerators, automatic vending machines, showcases, hot-water supply systems, refrigerating systems or heating systems.

In the present invention, the water content in the system is preferably 300 ppm by mass or less, more preferably 200 ppm by mass or less. The residual air partial pressure in the system is preferably 10 kPa or less, more preferably 5 kPa or less.

### Examples

The present invention is hereunder more specifically described by reference to Examples, but it should be construed that the present invention is by no means limited by these Examples.

### <Properties of Base Oil>

The properties of the base oil were determined according to the following manner.

### (1) Hydroxyl Value

Measured according to JIS K0070:1992.

### (2) 100°C Kinematic Viscosity

Measured according to JIS K2283:2000, using a glass-made capillary viscometer.

### (3) Number-Average Molecular Weight (Mn)

The number-average molecular weight was measured using a gel permeation chromatograph (GPC).

As for the GPC, one having two columns of "TSKgel SuperMultipore HZ-M", manufactured by Tosoh Corporation successively connected to each other was used; tetrahydrofuran was used as an eluent; the measurement was performed using a refractive index detector (RI detector) as a detector; and the number average molecular weight (Mn) was determined using polystyrene as a standard sample.

### (4) Volume Resistivity

Measured according to JIS C 2101:2010.

### <Preparation of Lubricating Oil Composition for refrigerators>

The kinds of the components used for preparing lubricating oil compositions for refrigerators are shown below.

### (1) Base oil

PVE-A1 to PVE-A4: Polyethyl vinyl ether
PVE-B1 to PVE-B4: Copolymer of polyethyl vinyl ether (PEVE) and polyisobutyl vinyl ether (PIBVE) (PEVE/PIBVE = 9/1 by mol)
PAG-1 to PAG-4: Polyoxypropylene glycol
ECP-1 to ECP-4: Copolymer of polypropylene glycol (PPG) and polyethyl vinyl ether (PEV) (PPG/PEV = 5/5 by mol)
POE-1 to POE-4: Ester of pentaerythritol with mixture of octanoic acid (C8 acid) and nonanoic acid (C9 acid) (C8 acid/C9 acid = 1/1.1 by mol)
The properties of the base oil (P) are shown in Table 1.

**Table 1**

| Kind of Base Oil | Hydroxyl Value (mgKOH/g) | 100°C Kinematic Viscosity (mm²/s) | Number-Average Molecular Weight (Mn) | Volume Resistivity (10⁸ Ω·m) |
|---|---|---|---|---|
| PVE-A1 | 3 | 9.5 | 865 | 12000 |
| PVE-A2 | 5 | 25.2 | 1200 | 16000 |
| PVE-A3 | 15 | 7.5 | 660 | 8000 |
| PVE-A4 | 21 | 8.4 | 560 | 5200 |
| PVE-B1 | 2 | 8.0 | 665 | 11000 |
| PVE-B2 | 5 | 20.5 | 980 | 12000 |
| PVE-B3 | 15 | 10.1 | 760 | 7300 |
| PVE-B4 | 25 | 10.3 | 740 | 4600 |
| PAG-1 | 1 | 10.3 | 1020 | 10 |
| PAG-2 | 4 | 20.2 | 1450 | 12 |
| PAG-3 | 14 | 12.2 | 980 | 7.0 |
| PAG-4 | 33 | 9.5 | 870 | 1.7 |
| ECP-1 | 1 | 10.5 | 870 | 500 |
| ECP-2 | 5 | 10.6 | 860 | 660 |
| ECP-3 | 15 | 11.1 | 850 | 170 |
| ECP-4 | 27 | 10.0 | 750 | 93 |
| POE-1 | 1 | 8.5 | 670 | 11000 |
| POE-2 | 5 | 10.0 | 675 | 13000 |
| POE-3 | 11 | 10.5 | 680 | 6900 |
| POE-4 | 23 | 8.9 | 665 | 3200 |

### (2) Antioxidant

2,6-Di-tert-butyl-4-methylphenol

### (3) Acid Scavenger

2-Ethylhexyl glycidyl ether

### (4) Other Additives

The following components were added each in the blending amount (% by mass) shown in the parenthesis relative to the total amount of the lubricating oil composition for refrigerators, the total amount thereof being 1.1% by mass.
Extreme-pressure agent: Tricresyl phosphate (1.0% by mass)
Anti-foaming agent: Silicone-type anti-foaming agent (0.1% by mass)

### [Examples 1 to 15, and Comparative Examples 1 to 5]

The base oil, the antioxidant, the acid scavenger and the other additives were blended in the blending ratio shown in Tables 2 to 4 to prepare lubricating oil compositions for refrigerators. Using a refrigerant prepared by mixing difluoromethane (R32), trifluoroiodomethane (CF₃I) and 1,1,1,2,2-pentafluoroethane (R125) in a ratio by mass of 50.0/38.0/12.0, the thermal stability of the lubricating oil compositions for refrigerators was evaluated.

### <Evaluation Method for Thermal Stability>

Thermal stability was evaluated in a sealed tube test (JIS K 2211:2009, Annex C). A glass tube was filled with the lubricating oil composition for refrigerators prepared in Examples 1 to 15 and Comparative Examples 1 to 5 and the above-mentioned refrigerant (lubricating oil composition for refrigerators/refrigerant = 2 g/0.5 g, water content in the lubricating oil composition for refrigerators: 200 ppm by mass), along with metal catalysts of iron, copper and aluminum, then vacuumed, sealed up and stored under the condition of a temperature of 175°C for 3 days. After thus stored, the glass tube contents were visually checked for oil appearance, presence or absence of deposits (color of the deposits, if any), and the catalyst appearance (presence or absence of denaturation), and the acid value was measured. In Examples 1 to 6 and Comparative Example 1 and 2, the acid value was measured according to JIS K2501:2003 in an indicator photometric titration method (see Annex 1 of the JIS standards).

The oil appearance was evaluated as an ASTM color, and those with 0.5 or less (L0.5) were considered to have good oil appearance, while those with more than 0.5 (L1.0, L1.5) were considered to have poor oil appearance.

The evaluation results of thermal stability are shown in Table 2 to Table 4.

**Table 2**

| | | | Example | | | | | |
|---|---|---|---|---|---|---|---|---|
| | | | 1 | 2 | 3 | 4 | 5 | 6 |
| Formulation (% by mass) | Base Oil | PVE-A1 | 98.60 | - | - | - | - | - |
| | | PVE-A2 | - | 98.60 | - | - | - | - |
| | | PVE-A3 | - | - | 98.60 | - | - | - |
| | | PVE-B1 | - | - | - | 98.60 | - | - |
| | | PVE-B2 | - | - | - | - | 98.60 | - |
| | | PVE-B3 | - | - | - | - | - | 98.60 |
| | An tioxidan t | | 0.3 | 0.3 | 0.3 | 0.3 | 0.3 | 0.3 |
| | Acid Scavenger | | 0.1 | 0.1 | 0.1 | 0.1 | 0.1 | 0.1 |
| | Other Additives | | 1.0 | 1.0 | 1.0 | 1.0 | 1.0 | 1.0 |
| Hydroxyl Value of Lubricating Oil Composition for refrigerators (mgKOH/g) | | | 3 | 5 | 15 | 2 | 5 | 15 |
| Thermal Stability Test | | Oil Appearance | L0.5 | L0.5 | L0.5 | L0.5 | L0.5 | L0.5 |
| | | Deposit | No | No | No | No | No | No |
| | | Catalyst Appearance | No/No/ No | No/No/ No | No/No/ No | No/No/ No | No/No/ No | No/No/ No |
| | | Fe/Cu/AL | | | | | | |
| | | Acid Value (mgKOH/g) | 0.20 | 0.45 | 0.78 | 0.17 | 0.39 | 0.70 |

**Table 3**

| | | | Example | | | | | | | | |
|---|---|---|---|---|---|---|---|---|---|---|---|
| | | | 7 | 8 | 9 | 10 | 11 | 12 | 13 | 14 | 15 |
| Formulation (% by mass) | Base Oil | PAG-1 | 98.60 | | - | - | - | - | - | - | - |
| | | PAG-2 | - | 98.60 | - | - | - | - | - | - | - |
| | | PAG-3 | - | - | 98.60 | - | - | - | - | - | - |
| | | ECP-1 | - | - | - | 98.60 | - | - | - | - | - |
| | | ECP-2 | - | - | - | - | 98.60 | - | - | - | - |
| | | ECP-3 | - | - | - | - | - | 98.60 | - | - | - |
| | | POE-1 | - | - | - | - | - | - | 98.60 | - | - |
| | | POE-2 | - | - | - | - | - | - | - | 98.60 | - |
| | | POE-3 | - | - | - | - | - | - | - | - | 98.60 |
| | Antioxidant | | 0.3 | 0.3 | 0.3 | 0.3 | 0.3 | 0.3 | 0.3 | 0.3 | 0.3 |
| | Acid Scavenger | | 0.1 | 0.1 | 0.1 | 0.1 | 0.1 | 0.1 | 0.1 | 0.1 | 0.1 |
| | Other Additives | | 1.0 | 1.0 | 1.0 | 1.0 | 1.0 | 1.0 | 1.0 | 1.0 | 1.0 |
| Hydroxyl Value of Lubricating Oil Composition for refrigerators (mgKOH/g) | | | 1 | 4 | 14 | 1 | 5 | 15 | 1 | 5 | 11 |
| Thermal Stability Test | | Oil Appearance | L0.5 | L0.5 | L0.5 | L0.5 | L0.5 | L0.5 | L0.5 | L0.5 | L0.5 |
| | | Deposit | No | No | No | No | No | No | No | No | No |
| | | Catalyst Appearance | No/No /No | No/No /No | No/No /No | No/No /No | No/No /No | No/No /No | No/No /No | No/No /No | No/No /No |
| | | Fe/Cu/AL | | | | | | | | | |

**Table 4**

| | | | Comparative Example | | | | |
|---|---|---|---|---|---|---|---|
| | | | 1 | 2 | 3 | 4 | 5 |
| Formulation (% by mass) | Base Oil | PVE-A4 | 98.60 | - | - | - | - |
| | | PVE-B4 | - | 98.60 | - | - | - |
| | | PAG-4 | - | - | 98.60 | - | - |
| | | ECP-4 | - | - | - | 98.60 | - |
| | | POE-4 | - | - | - | - | 98.60 |
| | Antioxidant | | 0.3 | 0.3 | 0.3 | 0.3 | 0.3 |
| | Acid Scavenger | | 0.1 | 0.1 | 0.1 | 0.1 | 0.1 |
| | Other Additives | | 1.0 | 1.0 | 1.0 | 1.0 | 1.0 |
| Hydroxyl Value of Lubricating Oil Composition for refrigerators (mgKOH/g) | | | 21 | 25 | 33 | 27 | 23 |
| Thermal Stability Test | | Oil Appearance | L1.5 | L1.0 | L1.0 | L1.0 | L0.5 |
| | | Deposit | Brown | No | Black | No | No |
| | | Catalyst Appearance | No/No/No | No/No/No | No/No/No | No/No/No | Yes/Yes/ No |
| | | Fe/Cu/AL | | | | | |
| | | Acid Value (mgKOH/g) | 1.30 | 1.00 | - | - | - |

From Tables 2 to 4, the following are known.

As shown in Table 2 and Table 3, the lubricating oil compositions for refrigerators of Examples 1 to 15, having a hydroxyl value of 15 mgKOH/g or less, have a good oil appearance, have no deposit, and have no catalyst discoloration. In addition, the lubricating oil compositions for refrigerators of Examples 1 to 6 have a low acid value. Accordingly, it is known that the lubricating oil compositions for refrigerators of Examples 1 to 15 are all excellent in thermal stability.

As opposed to these, it is known that the lubricating oil compositions for refrigerators of Comparative Examples 1 to 5, having a hydroxyl value of more than 15 mgKOH/g as shown in Table 4, have at least some problems that the oil appearance is not good, deposits formed or the catalyst appearance is not good, and are poor in thermal stability. In addition, it is known that the lubricating oil compositions for refrigerators of Comparative Examples 1 and 2 have a large acid value and are poor in thermal stability.

## Claims

1. A lubricating oil composition for refrigerators for use for a refrigerant that contains difluoromethane (R32), trifluoroiodomethane (CF₃I) and at least one compound (α) selected from saturated fluorinated hydrocarbon compounds (HFC) except difluoromethane (R32);
which comprises at least one kind of base oil selected from polyoxyalkylene glycols, polyvinyl ethers, copolymers of a poly(oxy)alkylene glycol or a monoether thereof and a polyvinyl ether, and polyol esters, and wherein the hydroxyl value of the base oil is 15 mgKOH/g or less.

2. The lubricating oil composition for refrigerators according to claim 1, wherein in the refrigerant,
the total content of difluoromethane (R32) and trifluoroiodomethane (CF₃I) is 20% by mass or more and 99% by mass or less based on the total amount of the refrigerant,
the content of trifluoroiodomethane (CF₃I) is 5% by mass or more and 80% by mass or less based on the total amount of the refrigerant, and
the content of the compound (α) is 0.1% by mass or more based on the total amount of the refrigerant.

3. The lubricating oil composition for refrigerators according to claim 1 or 2, wherein in the refrigerant,
the total content of difluoromethane (R32) and trifluoroiodomethane (CF₃I) is 30% by mass or more and 95% by mass or less based on the total amount of the refrigerant,
the content of trifluoroiodomethane (CF₃I) is 10% by mass or more and 60% by mass or less based on the total amount of the refrigerant, and
the content of the compound (α) is 1% by mass or more based on the total amount of the refrigerant.

4. The lubricating oil composition for refrigerators according to any one of claims 1 to 3, wherein in the refrigerant,
the total content of difluoromethane (R32) and trifluoroiodomethane (CF₃I) is more than 50% by mass and 90% by mass or less based on the total amount of the refrigerant,
the content of trifluoroiodomethane (CF₃I) is 15% by mass or more and 50% by mass or less based on the total amount of the refrigerant, and
the content of the compound (α) is 5% by mass or more based on the total amount of the refrigerant.

5. The lubricating oil composition for refrigerators according to any one of claims 1 to 4, wherein the compound (α) is 1,1,1,2,2-pentafluoroethane (R125).

6. The lubricating oil composition for refrigerators according to any one of claims 1 to 5, wherein the hydroxyl value of the base oil is 10 mgKOH/g or less.

7. The lubricating oil composition for refrigerators according to any one of claims 1 to 6, wherein the hydroxyl value of the base oil is 5 mgKOH/g or less.

8. The lubricating oil composition for refrigerators according to any one of claims 1 to 7, wherein the volume resistivity of the base oil is 1 × 10⁸ Ω·m or more.

9. The lubricating oil composition for refrigerators according to any one of claims 1 to 8, which is used in car air-conditioners, electromotive car air-conditioners, gas heat pumps, air conditioners, refrigerators, automatic vending machines, showcases, hot-water supply systems, refrigerating systems or heating systems.
